(19) Europäisches Patentamt
European Patent Office
Office européen des brevets

(11) **EP 3 018 787 B1**

(12) **EUROPEAN PATENT SPECIFICATION**

(45) Date of publication and mention
of the grant of the patent:
**11.04.2018 Bulletin 2018/15**

(21) Application number: **14820579.2**

(22) Date of filing: **01.07.2014**

(51) Int Cl.:
*H02J 3/46* *(2006.01)*    *H02J 3/32* *(2006.01)*
*H02J 3/38* *(2006.01)*    *H02J 7/35* *(2006.01)*
*H02J 7/00* *(2006.01)*    *H02J 9/06* *(2006.01)*

(86) International application number:
**PCT/JP2014/003513**

(87) International publication number:
**WO 2015/001800 (08.01.2015 Gazette 2015/01)**

(54) **MICROGRID CONTROL DEVICE AND CONTROL METHOD THEREFOR**

STEUERUNGSVORRICHTUNG FÜR MIKRONETZ UND STEUERUNGSVERFAHREN DAFÜR

DISPOSITIF DE COMMANDE DE MICRO-RÉSEAU ET PROCÉDÉ DE COMMANDE POUR CELUI-CI

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.07.2013 JP 2013139801**

(43) Date of publication of application:
**11.05.2016 Bulletin 2016/19**

(73) Proprietor: **Kawasaki Jukogyo Kabushiki Kaisha
Kobe-shi, Hyogo 650-8670 (JP)**

(72) Inventors:
• **IJICHI, Hirofumi**
  **Kobe-shi, Hyogo 650-8670 (JP)**
• **NISHIDA, Yoji**
  **Kobe-shi, Hyogo 650-8670 (JP)**
• **EDO, Shinichi**
  **Kobe-shi, Hyogo 650-8670 (JP)**
• **TAKEBE, Tomoaki**
  **Kobe-shi, Hyogo 650-8670 (JP)**

(74) Representative: **Leinweber & Zimmermann
Rosental 7, II. Aufgang
80331 München (DE)**

(56) References cited:
**EP-A1- 2 528 181        WO-A1-2009/015331
WO-A1-2013/024709    WO-A1-2013/024709
JP-A- 2004 064 814      JP-A- 2012 085 468
US-A1- 2011 125 336    US-A1- 2013 099 576**

## Description

## Technical Field

The present invention relates to a control device and a control method of a microgrid which uses a heat engine power generator and a natural energy power generation device.

## Background Art

In the Great East Japan Earthquake which happened in Japan on March 11, 2011, many of the citizens who evacuated earthquake areas suffered from chronic blackout and electric power deficiency in emergency evacuation areas due to collapsed or severed power grids. Power generation was carried out by use of home (non-utility) power generators such as diesel generators. However, there was a limitation on fossil fuel. Under the circumstances, there was a need for a system which was able to stably supply electric power, while lessening the usage amount of the fossil fuel in the home (non-utility) power generators such as the diesel generators.

Japan has many isolated islands where people live. Power systems in the isolated islands are not interactively connected to a main land. Most of the power systems are independent systems which make a balance between power generation and electric power supply within the islands. In the main land, atomic power generation, thermal power generation and hydraulic power generation are carried out. By comparison, in the isolated islands, power generation is carried out by heat engines such as the diesel generators which use the fossil fuel, in most cases. In the power generation which uses the heat engines in the isolated islands, the amount of electric power supply and the number of operating heat engines are changed depending on changes in demands within the islands, in order to stably supply the electric power. Therefore, it is difficult to perform the power generation while maintaining the high fuel efficiency in the heat engines. A decrease in the fuel efficiency brings about an increase in the usage amount of the fossil fuel, and leads to an increase in the emission amount of carbon dioxide which negatively affects an environment.

Regarding a power generation system which uses the heat engines, there is known a technique, which uses a storage battery as an auxiliary electric power source for the power generation (e.g., see Patent Literature 1). This power generation system can effectively reduce the usage amount of the fossil fuel to some extent, by the high-efficient operation of the heat engines.

However, still, all of the electric power, including the electric power of the storage battery, is obtained from the electric power generated in the heat engines by use of the fossil fuel. This power generation system can contribute to reduction of the usage amount of the fossil fuel, by the high-efficient operation of the heat engines, but its effect is limited.

In recent years, as an alternative energy source of the fossil fuel, an attention has been focused on natural energy which is friendly to a global environment (earth conscious). Since the government is now promoting feed-in tariff of the natural energy, autonomous communities which introduce solar energy power generation or wind force power generation are increasing in number. Under the circumstances, a technique relating to the microgrid which makes use of the natural energy power generation has been recently developed (e.g., see Patent Literature 2 to Patent Literature 4).

## Citation List

## Patent Literature

Patent Literature 1: Japanese Laid-Open Patent Application Publication No. 2007-82311
Patent Literature 2: Japanese Laid-Open Patent Application Publication No. 2002-135979
Patent Literature 3: Japanese Laid-Open Patent Application Publication No. 2011-83044
Patent Literature 4: Japanese Laid-Open Patent Application Publication No. 2010-259303

EP 2 528 181 A1 discloses a control device according to the pre-characterizing clause of claim 1 and a method for controlling a microgrid according to the pre-characterizing clause of claim 7. WO 2013/024709 A1 discloses a power generation control device and a hybrid independent power generation system. WO 2009/015331 A1 discloses an apparatus, a system and a method to match the generation and use of hybrid electric power. US 2013/0099576 A1 discloses an integrated power system control method and a related apparatus with an energy storage element.

## Summary of Invention

## Technical Problem

However, the natural energy is an unsteady energy source which depends on a weather. Therefore, it is difficult to use the natural energy singly in the independent power generation system. For this reason, in a case where the microgrid which makes use of the natural energy power generation is used along with the power generation system which uses the heat engines, it is difficult to stably maintain an electric power output for a long period of time, while maintaining the high-efficient operation of the heat engines.

The present invention has been developed to solve the above-described problem. An object of the present invention is to stably output electric power for a long period of time, improve fuel efficiency, and suppress emission of carbon dioxide, while maintaining the high-efficient operation of a heat engine, in a microgrid which makes use of heat engine power generation and natural energy power generation.

**Solution to Problem**

To solve the above-described problem, an aspect of the present invention provides a control device for a microgrid according to claim 1. As defined herein, the term "heat engine power generator operates a heat engine to generate electric power" includes a power generator which operates an internal combustion engine such as a diesel power generator, or an external combustion engine such as a steam turbine to generate the electric power.

In accordance with this configuration, firstly, the control device supplies the electric power generated in the natural energy power generation device to the load to meet the electric power demand of the load. If this electric power is deficient, then the control device causes the heat engine power generator to generate the electric power at a constant amount, and the storage battery of the electric storage device to be charged or discharged to compensate for surplus or deficient electric power of the total electric power which is a sum of the electric power generated in the heat engine power generator and the electric power generated in the natural energy power generation device, with respect to the electric power demand of the load. In this configuration, the control device causes the heat engine power generator to generate the electric power while making use of the natural energy power generation device as an auxiliary power supply and absorbing a change in the electric power generated in the natural energy power generation device. In this way, the control device can meet the electric power demand of the load. In this case, the control device adjusts the amount of the electric power generated in the heat engine power generator and suitably charges or discharges the storage battery. Thus, the storage battery can be maintained in the chargeable or dischargeable state all the time. As a result, the heat engine power generator basically generates the electric power at a constant amount, while the operation in which the heat engine power generator generates the electric power while adjusting its amount is performed in a case where it is necessary to maintain the storage battery in the chargeable or dischargeable state. As a result, the fuel efficiency can be improved by the high-efficient operation of the heat engine and the emission of carbon dioxide can be lessened.

In the above control device of the microgrid, the control device may be configured to control the at least one heat engine power generator to perform or stop the power generation and control the electric storage device to charge or discharge the storage battery such that a state of charge of the storage battery reaches a predetermined target value, to maintain the storage battery in the chargeable or dischargeable state.

In accordance with this configuration, since the state of charge (SOC) of the storage battery is controlled to reach the predetermined target value, the storage battery can be charged or discharged at any time if necessary. This makes it possible to appropriately absorb a change in the electric power generated in the natural energy power generation device.

The above control device of the microgrid may firstly supply the electric power generated in the natural energy power generation device to the load to meet the electric power demand of the load, and if the electric power supplied by the control device is deficient, the control device may control the heat engine power generator and the electric storage device in such a manner that the control device causes the heat engine power generator to generate the electric power at a constant amount, and the storage battery of the electric storage device to be charged or discharged to compensate for surplus or deficient electric power of total electric power which is a sum of the electric power generated in the heat engine power generator and the electric power generated in the natural energy power generation device, with respect to the electric power demand of the load.

In accordance with this configuration, by choosing the electric power output with high efficiency as the electric power of the constant amount, the heat engine can be operated with high efficiency.

The control device of the microgrid may comprise an electric power difference calculation section for calculating an electric power difference between the electric power demand of the load and the electric power generated in the natural energy power generation device; a charged/discharged electric power calculation section for calculating charged/discharged electric power with respect to the storage battery based on a state of charge of the electric storage device; a target electric power calculation section for calculating target electric power of the at least one heat engine power generator, based on the electric power difference and the charged/discharged electric power; and an electric storage device control section for controlling the electric storage device to charge or discharge the storage battery, based on total electric power which is a sum of the electric power generated in the natural energy power generation device and the target electric power of the at least one heat engine power generator, and the electric power demand of the load.

In accordance with this configuration, firstly, the control device supplies the electric power generated in the natural energy power generation device to the load to meet the electric power demand of the load. If this electric power is deficient, then the control device causes the heat engine power generator to generate the electric power, the heat engine power generator to generate the electric power according to the state of charge (SOC) of the storage battery, and the storage battery of the electric storage device to be charged or discharged to compensate for the surplus or deficient electric power of the total electric power which is a sum of the electric power generated in the heat engine power generator and the electric power generated in the natural energy power generation device, with respect to the electric power demand of the load. In this configuration, the control device causes the heat engine power generator to generate the electric power while making use of the natural energy power generation device as an auxiliary power supply and absorbing a change in the electric power generated in the natural energy power generation device. In this way, the control device can meet the electric power demand of the load. In this case, the storage battery can be maintained in the chargeable or dischargeable state. As a result, the fuel efficiency can be improved by the high-efficient operation of the heat engine and the emission of carbon dioxide can be lessened.

The electric power difference calculation section may further include: a filtering processing section for performing filtering processing of the electric power difference; and a multi-value processing section for performing multi-value processing of the electric power difference which has been subjected to the filtering processing to convert the electric power difference into two or more values, each of the two or more values indicating the electric power corresponding to the number of the at least one heat engine power generator which generates the electric power at a constant amount, the number including zero, wherein the target electric power calculation section may calculate the target electric power of the at least one heat engine power generator based on the electric power difference which has been subjected to the filtering processing and the multi-value processing, and the charged/discharged electric power.

In accordance with this configuration, it becomes possible to operate the heat engine with high efficiency, while suppressing an increase in the number of times of start and stop of the power generation of the heat engine power generator and an increase in the operation time of the heat engine power generator, which is caused by a rapid change in the electric power generated in the natural energy power generation device or a rapid change in the electric power demand of the load.

The target electric power calculation section may be configured to limit the target electric power of the at least one heat engine power generator to a predetermined limit value.

In accordance with this configuration, the heat engine power generator can be suitably operated.

The above control device of the microgrid may be configured to perform parallel-off of the natural energy power generation device from the distribution line, when total electric power which is a sum of target electric power of the at least one heat engine power generator and the electric power generated in the natural energy power generation device is larger than the electric power demand of the load and an amount of the electric power charged in the storage battery of the electric storage device (or the state of charge of the storage battery) exceeds a predetermined upper limit value.

In accordance with this configuration, since it becomes possible to avoid a situation in which the operation of the system is impeded by the excessively charged state of the storage battery, the operation of the system can continue.

Another aspect of the present invention provides a method of controlling a microgrid according to claim 7.

In accordance with this configuration, the fuel efficiency can be improved by the high-efficient operation of the heat engine and the emission of carbon dioxide can be lessened.

The above and further objects, features and advantages of the present invention will more fully be apparent from the following detailed description of preferred embodiment with accompanying drawings.

**Advantageous Effects of Invention**

In accordance with the present invention, in a microgrid which makes use of heat engine power generation and natural energy power generation, an electric power output can be stabilized, the fuel efficiency can be improved, and the emission of carbon dioxide can be lessened, while maintaining the high-efficient operation of the heat engine.

**Brief Description of Drawings**

Fig. 1 is a block diagram showing the exemplary configuration of a microgrid which uses a control device according to an embodiment of the present invention.
Fig. 2 is a block diagram showing the exemplary configuration of the control device of the microgrid of Fig. 1.
Fig. 3 is a block diagram showing the specific configuration of the control device of Fig. 2.
Fig. 4 is a graph for explaining the control of electric power generated in heat engine power generators, the control being performed by the control device of the microgrid of Fig. 1 based on natural energy electric power (electric power generated using natural energy) and an electric power demand of a load.
Fig. 5 is a graph for explaining the control of the electric power generated in the heat engine power generators based on the SOC of a storage battery, the control being performed by the control device of the microgrid of Fig. 1.
Fig. 6 is a graph for explaining the control of the electric power generated in the heat engine generators based on an output limit value, the control being performed by the control device of the microgrid of Fig. 1.
Fig. 7 is a graph for explaining an exemplary operation controlled by a control device of a microgrid according to a comparative example.

Fig. 8 is a graph for explaining an exemplary operation controlled by the control device of the microgrid of Fig. 1.

Fig. 9 is a graph for explaining the control for preventing the storage battery from being excessively charged, the control being performed by the control device of the microgrid of Fig. 1.

## Description of Embodiments

Hereinafter, the embodiment of the present invention will be described with reference to the accompanying drawings.

Hereinafter, throughout the drawings, the same or corresponding components are identified by the same reference symbols and will not be described repeatedly.

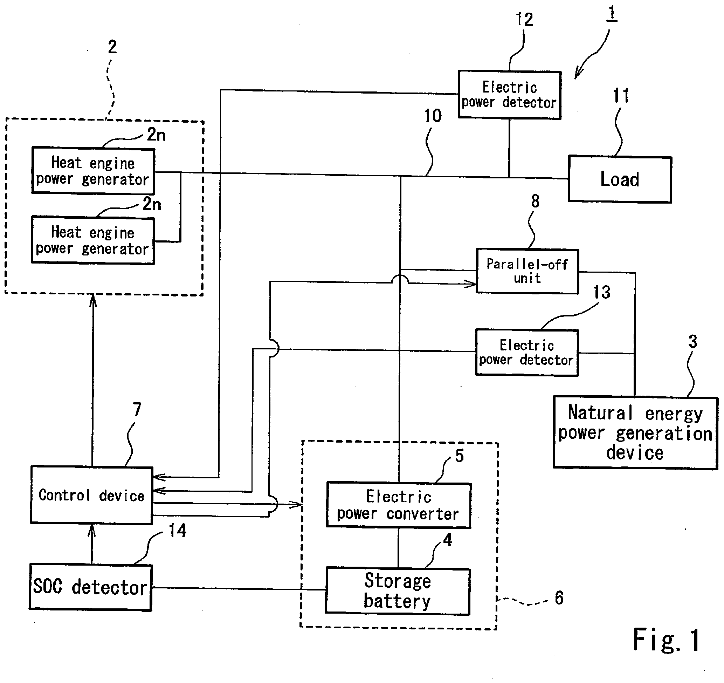

Fig. 1 is a block diagram showing the exemplary configuration of a microgrid which uses a control device according to the embodiment of the present invention.

As shown in Fig. 1, a microgrid 1 includes a heat engine power generation device 2 including at least one heat engine power generator (one or more heat engine power generator(s)) 2n (hereinafter will be simply referred to as "heat engine power generator 2n") which operates a heat engine to generate electric power, a natural energy power generation device 3 which generates the electric power by use of natural energy, an electric storage device 6 including a storage battery 4 and an electric power converter 5, and a control device 7 of the microgrid 1 (hereinafter will be simply referred to as "control device 7"), which controls the output of the heat engine power generator 2n (namely, output of the heat engine power generation device 2), and the electric storage device 6. The microgrid 1 further includes an electric power detector 12 which detects the electric power demand of a load 11, an electric power detector 13 which detects the electric power generated in the natural energy power generation device 3, and an SOC detector 14 which detects the state of charge (SOC) of the storage battery 4. The electric power detectors 12, 13, and the SOC detector 14 send their detection values to the control device 7.

In the present embodiment, it is assumed that the microgrid 1 is operated independently of a utility power supply provided by a power company. In other words, the microgrid 1 is used in, for example, an isolated island which is not interactively connected to the utility power supply situated in a main land.

Each of the heat engine power generators 2n of the heat engine power generation device 2 is connected to the load 11 via a distribution line 10, and operates the heat engine to generate the electric power, in response to a command output from the control device 7. The heat engine power generator 2n is configured to operate the heat engine including an internal combustion engine such as a diesel power generator, or an external combustion engine such as a steam turbine to generate the electric power. In the present embodiment, the heat engine power generation device 2 includes two diesel power generators 2n connected in parallel with the distribution line 10, and performs a parallel operation in response to a command output from the control device 7.

The natural energy power generation device 3 is constituted by, for example, a solar energy power generation device, a wind force power generation device, or the like and connected to the distribution line 10 via a parallel-off unit 8. The parallel-off unit 8 is configured to perform parallel-off of the natural energy power generation device 3, if the operation of the microgrid 1 is impeded.

The electric storage device 6 includes the storage battery 4 and the electric power converter 5. The electric storage device 6 is configured to cause the electric power converter 5 to charge the storage battery 4 with the electric power fed via the distribution line 10, in response to a charging command output from the control device 7, and discharge the storage battery 4 to feed the electric power to the distribution line 10 in response to a discharging command output from the control device 7.

The storage battery 4 serves to compensate for a difference between the electric power demand of the load 11 and total electric power generated in the power generation, the difference being generated as the natural energy (amount of received solar light, wind velocity, etc.) changes or the high-efficient operation of the heat engine proceeds. In the present embodiment, the storage battery 4 is, for example, a nickel hydride battery. The storage battery 4 may be another secondary battery such as a lead storage battery or a lithium-ion battery. In the present embodiment, the SOC detector 14 detects the state of charge (SOC) of the storage battery 4 and outputs the detected SOC of the storage battery 4 to the control device 7.

The electric power converter 5 charges or discharges the storage battery 4 by the interconversion between AC power and DC power in response to the charging/discharging command output from the control device 7. The configuration of the electric power converter 5 is not particularly limited. In the present embodiment, the electric power converter 5 is constituted by, for example, a power conditioner system. The electric power converter 5 is configured to operate as a virtual power generator to perform the parallel operation with the heat engine power generator 2n, in charging/discharging control of the storage battery 4. To allow the electric power converter 5 to operate as the virtual power generator to perform the parallel operation with the heat engine power generator 2n, a power generator model (control model) included in the electric power converter 5 is required to have at least a droop characteristic. The specific configuration of the electric power converter 5 configured to operate as the virtual power generator can be realized by using a known art provided by the applicant of the present application (e.g., see Japanese Laid-Open Patent Application Publication No. 2007-244068, or Japanese Laid-Open Patent Application Publication No. 2009-225599).

The control device 7 is configured to control the outputs of the heat engine power generators 2n and the electric storage device 6. The control device 7 is configured to control the two heat engine power generators 2n to perform or stop the power generation and control the electric storage device 6 to charge or discharge the storage battery 4, in order to compensate for surplus or deficient electric power of the electric power generated in the natural energy power generation device 3, with respect to the electric power demand of the load 11, and maintain the storage battery 4 in a chargeable or dischargeable state. In the present embodiment, the control device 7 is constituted by, for example, a processor such as a FPGA (field programmable gate array), a PLC (programmable logic controller), or a micro controller, and is functional blocks performed by running programs contained in the processor. The control device 7 monitors the electric power demand of the load 11, which is detected by the electric power detector 12, the electric power generated in the natural energy power generation device 3, which is detected by the electric power detector 13, the SOC of the storage battery 4, which is detected by the SOC detector 14, and a voltage, a current, electric power, a frequency, and the like of the distribution line 10. Based on these monitored data, the control device 7 controls charging and discharging of the electric storage device 6, and the power generation and stop (start and stop of power generation), and output (generated electric power) of the heat engine power generators 2n.

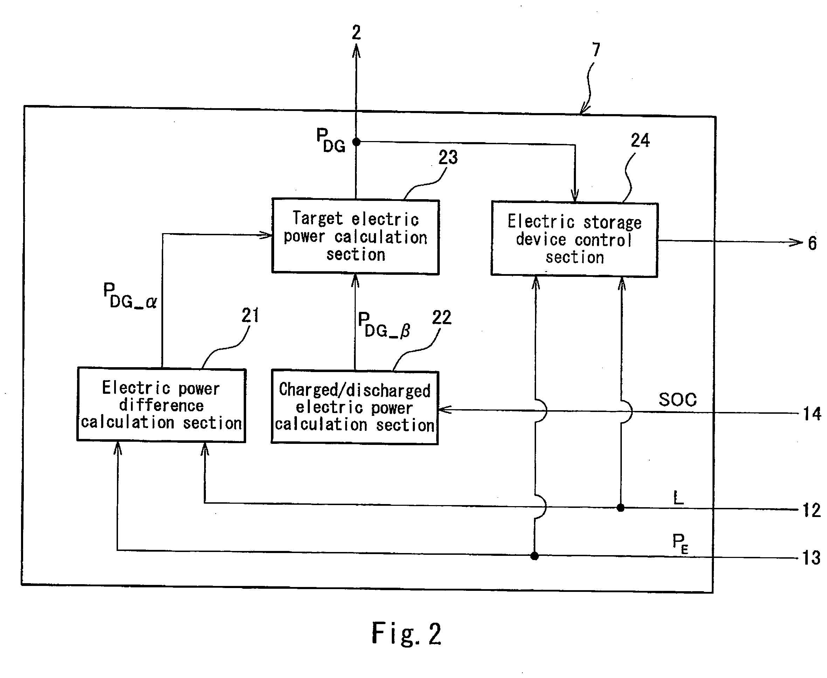

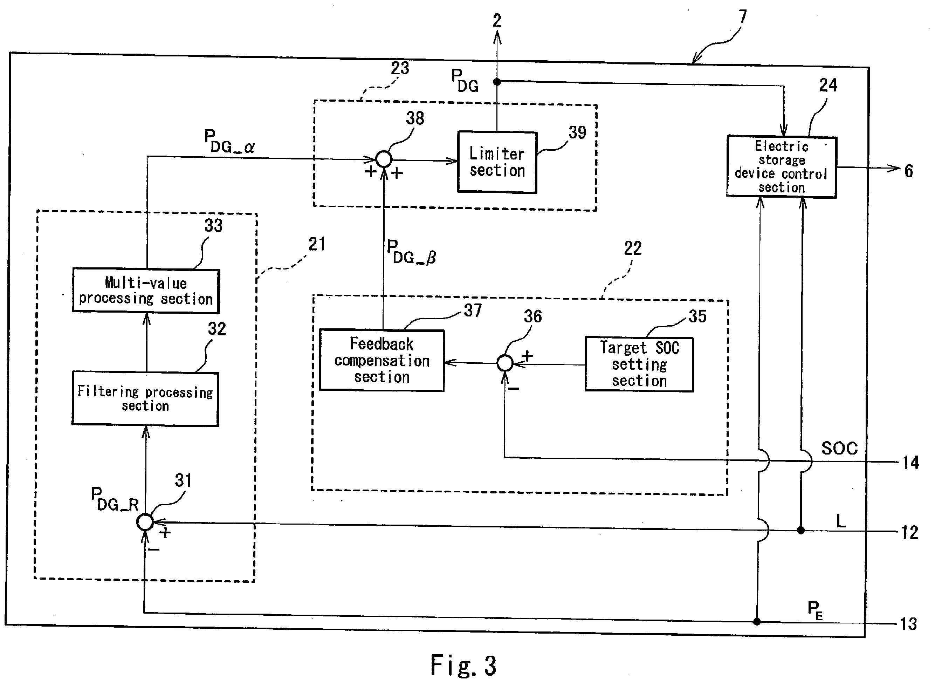

Next, the configuration of the control device 7 will be described with reference to Figs. 2 and 3.

Fig. 2 is a block diagram showing the exemplary configuration of the control device 7 of Fig. 1. As shown in Fig. 2, the control device 7 includes an electric power difference calculation section 21 for calculating an electric power difference $P_{PDG-\alpha}$ of the electric power $P_E$ generated in the natural energy power generation device 3 and the electric power demand (load electric power demand) L of the load 11, a charged/discharged electric power calculation section 22 for calculating charged/discharged electric power $P_{DG-\beta}$ with respect to the storage battery 4 based on the SOC of the storage battery 4, a target electric power calculation section 23 for calculating target electric power $P_{DG}$ of the two heat engine power generators 2n (heat engine power generation device 2), based on the electric power difference $P_{PDG-\alpha}$ and the charged/discharged electric power $P_{DG-\beta}$, and an electric storage device control section 24 for controlling the electric storage device 6 to charge or discharge the storage battery 4, based on total electric power which is a sum of the electric power $P_E$ generated in the natural energy power generation device 3 and the target electric power $P_{DG}$ of the two heat engine power generators 2n, and the electric power demand L of the load 11.

Fig. 3 is a block diagram showing the specific configuration of the control device of Fig. 2. As shown in Fig. 3, for example, the electric power difference calculation section 21 includes a subtracter 31, a filtering processing section 32, and a multi-value processing section 33. The subtracter 31 is configured to calculate the electric power difference $P_{DG-R}$ between the electric power $P_E$ generated in the energy power generation device 3 and the electric power demand L of the load 11, and output the calculated electric power difference $P_{DG-R}$ to the filtering processing section 32. The filtering processing section 32 is configured to perform filtering processing of the electric power difference $P_{DG-R}$ output from the subtracter 31, and output the resulting electric power difference to the multi-value processing section 33. The filtering processing is to smooth the electric power difference $P_{DG-R}$, by use of, for example, a low pass filter. The multi-value processing section 33 is configured to perform multi-value processing of the electric power difference which has been subjected to the filtering processing by the filtering section 32 into two or more values, and output the multi-valued electric power difference $P_{PDG-\alpha}$ to the target electric power calculation section 23. The multi-value processing is defined as processing for converting the electric power difference $P_{PDG-\alpha}$ into the two or more values, each of the two or more values indicating the electric power corresponding to the number (0, 1, or 2) of the two heat engine power generators 2n which generate the electric power at a constant amount, the number including zero. The constant electric power (electric power of a constant amount) is typically a rated output (generated rated electric power). However, the constant electric power is not limited to this, and may be any electric power so long as it is generated efficiently.

The charged/discharged electric power calculation section 22 performs feedback control to cause the heat engine power generators 2n to perform or stop the power generation so that the SOC of the storage battery 4 reaches a predetermined target value, in order to maintain the storage battery 4 in the chargeable or dischargeable state. In the present embodiment, the charged/discharged electric power calculation section 22 includes a target SOC setting section 35, a subtractor 36, and a feedback compensation section 37.

The target SOC setting section 35 reads a target SOC, which is the target value of the SOC of the storage battery 4, from, for example, a storage section (not shown) of the control device 7, the target SOC being pre-stored in the storage section, and outputs the target SOC to the subtractor 36. The subtractor 36 outputs a deviation of the SOC of the storage battery 4 from the target SOC to the feedback compensation section 37. The deviation is a value obtained by subtracting the SOC of the storage battery 4 from the target SOC of the storage battery 4. The feedback compensation section 37 is configured to appropriately compensate for the deviation of the SOC according to a response characteristic of a control system (the distribution line 10 and the electric storage device 6), and outputs the charged/discharged electric power $P_{DG-\beta}$. In the present embodiment, the feedback compensation section 37 is configured to perform, for example, PI compensation. Alternatively, the feedback compensation section 37 may be configured to perform another feedback compensation, for example, PID compensation.

The target electric power calculation section 23 includes an adder 38 and a limiter section 39. The adder 38 is configured to add the multi-valued electric power difference $P_{PDG-\alpha}$ and the feedback-compensated charged/discharged electric power $P_{DG-\beta}$, and output the resulting data to the limiter section 39. The limiter section 39 is configured to output the target electric power $P_{DG}$ which is the output command of the two heat engine power generators 2n, to the heat engine power generation device 2 and the electric storage device control section 24. The limiter section 39 is configured to limit the target electric power $P_{DG}$ of the heat engine power generation device 2 to a predetermined limit value. Alternatively, the limiter section 39 may be omitted.

In the present embodiment, the control device 7 of the microgrid controls the outputs of the heat engine power generators 2n, based on the electric power demand of the load 11, the natural energy electric power (electric power generated using the natural energy), and the state of charge (SOC) of the storage battery. Hereinafter, main processes 1) to 3) performed by the control device 7 will be described with reference to Figs. 3 to 6.

1) Firstly, the electric power generated in the heat engines based on the natural energy electric power is calculated. Considering that the natural energy is made best use of, the electric power generated in the heat engines is calculated according to the following formula (1) based on the natural energy electric power $P_E$ and the load electric power demand L:

$$P_{DG\text{-}R} = L - P_E \dots (1)$$

In some cases, the formula (1) steeply changes due to a change in the natural energy or the load 11. In these cases, unless some measures are taken, the number of the operating heat engines is increased or decreased frequently. This increases the number of times of start and stop of the heat engines. As a result, the fuel efficiency is decreased. In view of this, an electric power difference with a rapid change suppressed (smoothed) is calculated by performing filtering processing of the electric power difference $P_{DG-R}$.

The fuel efficiency in the heat engines (and the heat engine power generators 2n) is highest in the rated output operation. In the present embodiment, to maximize the number of the operating heat engines (and the heat engine power generators 2n) which perform the rated output operation, the multi-value processing of the electric power difference is performed.

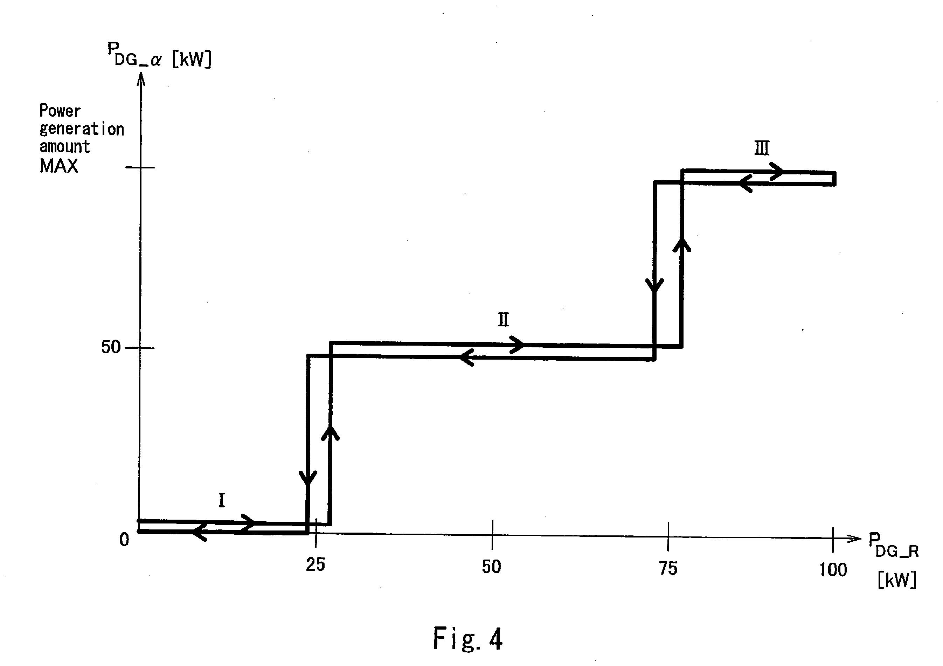

Fig. 4 is a graph for explaining the control of the electric power generated in the heat engine power generators based on the natural energy electric power and the electric power demand of the load. Now, the multi-value processing of the electric power difference will be primarily described. In the graph, a vertical axis indicates the electric power difference (power generation amount) $P_{PDG-\alpha}$ [kW] after the multi-value processing, while a horizontal axis indicates the electric power difference $P_{DG-R}$ [kW] before the multi-value processing. The rated output of one heat engine is expressed as $DG_R$ [kW].

In a range (I) in the graph, in a case where the electric power difference after previous processing is $P_{PDG-\alpha}= 0[kW]$, $P_{PDG-\alpha}= DG_R[kW]$, when $P_{DG-R} \geqq 0.5 \times DG_R + 0.05 \times DG_R$. On the other hand, when $P_{DG-R} < 0.5 \times DG_R+0.05\times DG_R$, $P_{PDG-\alpha}= 0[kW]$. In this way, the electric power difference $P_{PDG-\alpha}$ is multi-valued into $0[kW]$ or $DG_R[kW]$.

In a range (II) in the graph, in a case where the electric power difference after previous processing is $P_{PDG-a}= DG_R[kW]$, $P_{PDG-\alpha}= 2 \times DG_R[kW]$, when $P_{DG-R} \geqq 1.5 \times DG_R + 0.05 \times DG_R$. On the other hand, when $P_{DG-R} < 0.5 \times DG_R - 0.05 \times DG_R$, $P_{PDG-\alpha}= 0[kW]$. Further, when $0.5 \times DG_R - 0.05 \times DG_R \leqq P_{DG-R} < 1.5 \times DG_R + 0.05 \times DG_R$, $P_{PDG-\alpha}= DG_R[kW]$. In this way, the electric power difference $P_{PDG-\alpha}$ is multi-valued into $0[kW]$, $DG_R[kW]$ or $2 \times DG_R[kW]$.

In a range (III) in the graph, in a case where the electric power difference after previous processing is $P_{PDG-\alpha} =2 \times DG_R[kW]$, $P_{PDG-\alpha}= DG_R[kW]$, when $P_{DG-R} \leqq 1.5 \times DG_R - 0.05 \times DG_R$. On the other hand, when $P_{DG-R} > 1.5 \times DG_R - 0.05 \times DG_R$, $P_{PDG-\alpha}= 2 \times DG_R[kW]$. In this way, the electric power difference $P_{PDG-\alpha}$ is multi-valued into $DG_R[kW]$ or $2 \times DG_R[kW]$.

In the above-described manner, the electric power generated in the two heat engine power generators 2n can be calculated based on the electric power difference which has been subjected to the filtering processing and the multi-value processing. Therefore, it becomes possible to operate the heat engine power generators 2n to generate the constant electric power (in the present embodiment, rated output), while suppressing an increase in the number of times of start and stop of the power generation of the heat engine power generators 2n and an increase in the operation time of the heat engine power generators 2n, which is caused by a rapid change in the electric power generated in the natural energy power generation device 3 or a rapid change in the electric power demand of the load 11. As a result, it becomes possible to operate the heat engines with high efficiency and lessen emission of carbon dioxide.

2) Next, the electric power generated in the heat engine power generators 2n based on the SOC of the storage battery 4 is calculated. To maintain the storage device 4 in an operable state all the time, it is necessary to restrict the SOC of the storage device 4 in a regular use range.

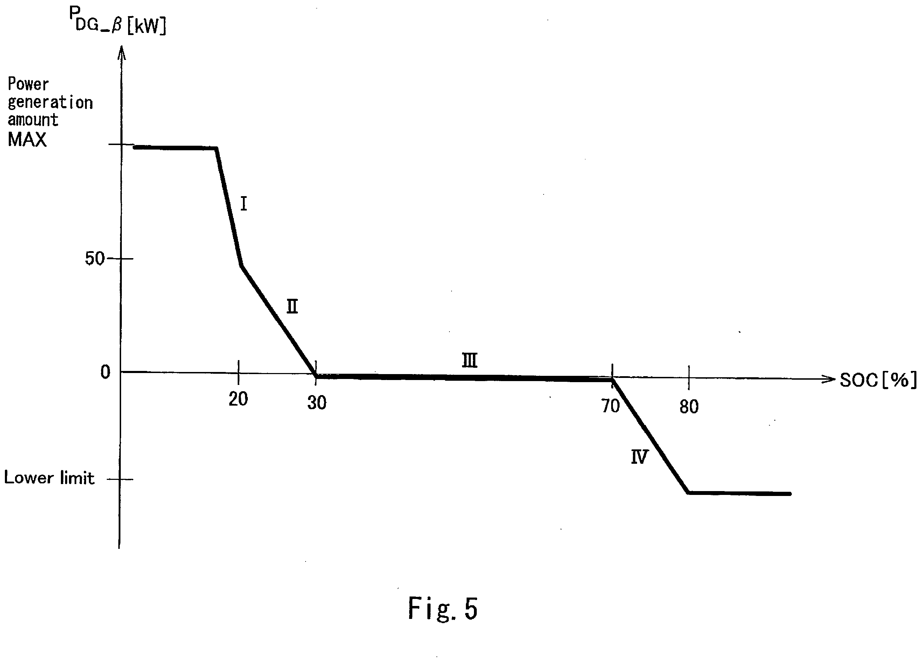

Fig. 5 is a graph for explaining the control of the electric power generated in the heat engine power generators based on the SOC of the storage battery 4. In the graph, a vertical axis indicates the charged/discharged electric power (power generation amount) $P_{DG-\beta}$ [kW]

corresponding to the deviation of the SOC of the storage battery 4 from the target SOC of the storage battery 4, while a horizontal axis indicates the SOC[%] of the storage battery 4. In the present embodiment, it is assumed that the regular use range of the storage battery is 20 to 80% of the SOC, and the lower limit value or upper limit value of the regular use is 30 or 70[%] of the SOC, respectively.

In the case of SOC = 0 to 20[%], $P_{DG-\beta}$ is a value [kW] based on the PI compensation (range I in the graph). In the case of SOC = 20 to 30[%], $P_{DG-\beta}$ is a value [kW] based on the PI compensation (range II in the graph). In the case of SOC = 30 to 70[%], $P_{DG-\beta}$ = 0[kW] (range III in the graph). In the case of SOC = 70 to 100[%], $P_{DG-\beta}$ is a value [kW] based on the PI compensation (range IV in the graph). The lower limit value of $P_{DG-\beta}$ in the graph is a lower limit value which satisfies (lower limit value > - $P_{PDG-\alpha}$) and (lower limit value = L - $P_E$ - $P_{PCSMAX}$ - $P_{PDG-\alpha}$). It should be noted that $P_{PCSMAX}$ is maximum discharge amount of the storage battery 4 controlled by the electric power converter 5.

In the above setting, when the SOC becomes close to the lower limit value or upper limit value (20 or 80[%]) of the regular use range, the PI compensation is performed using as a target value the lower limit value or upper limit value (30 or 70[%]) of the regular use, and the amount of the electric power generated in the two heat engine power generators 2n is increased or decreased as an operation amount. This allows the storage battery 4 to be charged or discharged to reach the target SOC. As a result, the storage battery 4 can be maintained in a chargeable or dischargeable state all the time. In this way, it becomes possible to compensate for a rapid change in the electric power generated in the natural energy power generation device 3 or a rapid change in the electric power demand of the load 11, and suppress an increase in the number of times of start and stop of the power generation of the heat engine power generators 2n and an increase in the operation time of the heat engine power generators 2n.

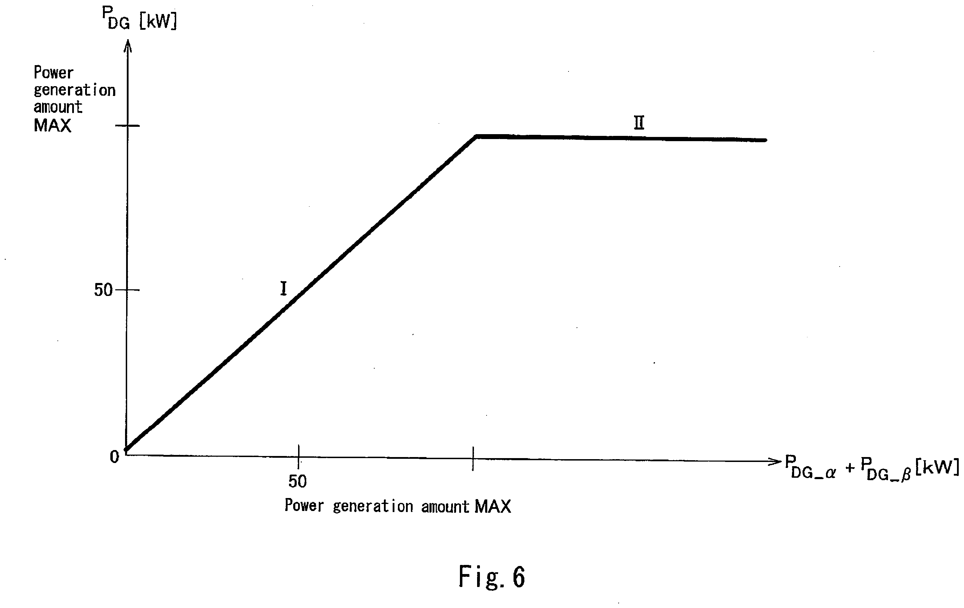

3) Finally, the electric power generated in the two heat engine power generators 2n (heat engine power generation device 2) based on the limit value is calculated. Fig. 6 is a graph for explaining the control of the electric power generated in the heat engine power generators based on an output limit value. In the graph, a vertical axis indicates the target electric power $P_{DG}$[kW] and a horizontal axis indicates $P_{PDG-\alpha}$ + $P_{DG-\beta}$ [kW]. In a case where the electric power generated in the heat engines, $P_{PDG-\alpha}$ + $P_{DG-\beta}$[kW] calculated in 1) and 2) exceeds the total electric power ("power generation amount MAX" in the graph) generated in the two heat engine power generators 2n (heat engine power generation device 2), the target electric power $P_{DG}$ is limited to the total electric power (range II in the graph). In this way, the two heat engine power generators 2n can be suitably operated.

**(Example)**

Hereinafter, an exemplary operation controlled by the control device of the microgrid according to the present embodiment will be described in conjunction with a comparative example.

Firstly, as the comparative example, a control method of a plurality of heat engine power generators disclosed in Patent Literature 1 will be described. This comparative example is directed to operating two heat engine power generators with high efficiency and maintaining the SOC of the storage battery in an operable range.

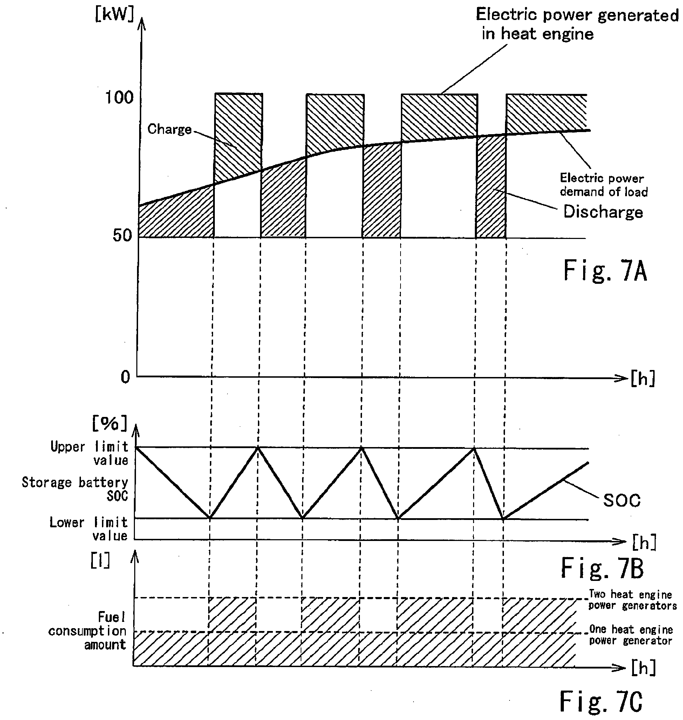

Fig. 7 is a graph for explaining the exemplary operation controlled by the control device of the microgrid according to the comparative example. An upper graph (a) of Fig. 7 indicates a change in the electric power [kW] generated in the heat engine power generators, the change occurring over time with respect to the electric power demand of a load. An intermediate graph (b) of Fig. 7 indicates a change in the SOC [%] of the storage battery, the change occurring over time. A lower graph (c) of Fig. 7 indicates a change in fuel consumption amount (I) of the heat engine power generators, the change occurring over time. As shown in Fig. 7, the upper and lower limit values of the SOC of the storage battery at timings when the heat engine power generation device including the two heat engine power generators starts and stops the power generation are pre-set. In this setting, if the SOC of the storage battery reaches the upper limit value of the SOC, then the storage battery is discharged such that the total electric power generated in the heat engine power generators falls below the electric power load. On the other hand, if the SOC of the storage battery reaches the lower limit value of the SOC, then the storage battery is charged with surplus electric power up to the upper limit value of the SOC such that the total electric power generated in the heat engine power generators exceeds the electric power load. By controlling the start and stop of the power generation of the heat engine power generators depending on the SOC of the storage battery in the above-described manner, the SOC of the storage battery can be maintained in the operable range.

However, in the comparative example, all of the electric power charged into the storage battery is covered by the electric power supplied from the heat engine power generators. Therefore, all of the electric power is supplied by consuming fuel. For this reason, the comparative example can effectively reduce the usage amount of the fuel to some extent by the high-efficient operation of the heat engines, but cannot effectively reduce the emission amount of carbon dioxide.

To solve the above-described problem, the present inventors have focused an attention to the natural energy which recently has attracted an attention as an alternative energy source of the fossil fuel. The natural energy is an unsteady energy source which depends on a weather. For this reason, it is difficult to use the natural energy singly as an independent power generation system.

In light of the above, the present inventors focused an attention on reduction of the emission amount of carbon dioxide by use of the microgrid including the natural energy as an auxiliary electric power source which can replace the conventional storage battery, while maintaining the high-efficient operation of the heat engine powers.

In the microgrid 1 of the present embodiment, the electric power is supplied to the load 11 primarily from the heat engine power generators 2n and the natural energy power generation device 3. To make the best use of the natural energy and maintain the high-efficient operation of the heat engines, a difference between the electric power demand of the load 11 and the total electric power, the difference being caused by a change in the natural energy and a change in the load 11 is compensated for, by charging or discharging the storage battery 4. Firstly, the control device 7 supplies the electric power generated in the natural energy power generation device 3 to the load 11 to meet the electric power demand of the load 11. If this electric power is deficient, then the control device 7 causes the heat engine power generators 2n to generate the electric power at a constant amount, and the storage battery 4 of the electric storage device 6 to be charged or discharged to compensate for surplus or deficient electric power of the total electric power with respect to the electric power demand of the load 11, the total electric power being a sum of the electric power generated in the heat engine power generators 2n and the electric power generated in the natural energy power generation device 3. The control device 7 is configured to control the heat engine power generators 2n and the electric storage device 6 in the above-described manner. However, if the SOC of the storage battery 4 reaches the operable upper or lower limit value, the control device 7 causes the heat engine power generators 2n to increase or decrease the electric power output, and the storage battery 4 to be charged or discharged, so that the SOC of the storage battery 4 can be maintained in the operable range. In this way, the microgrid 1 can continue to operate. In addition, since the high-efficient operation of the heat engines is performed while making use of the natural energy electric power, the fuel consumption amount can be reduced, and the emission of carbon dioxide can be lessened as compared to the comparative example.

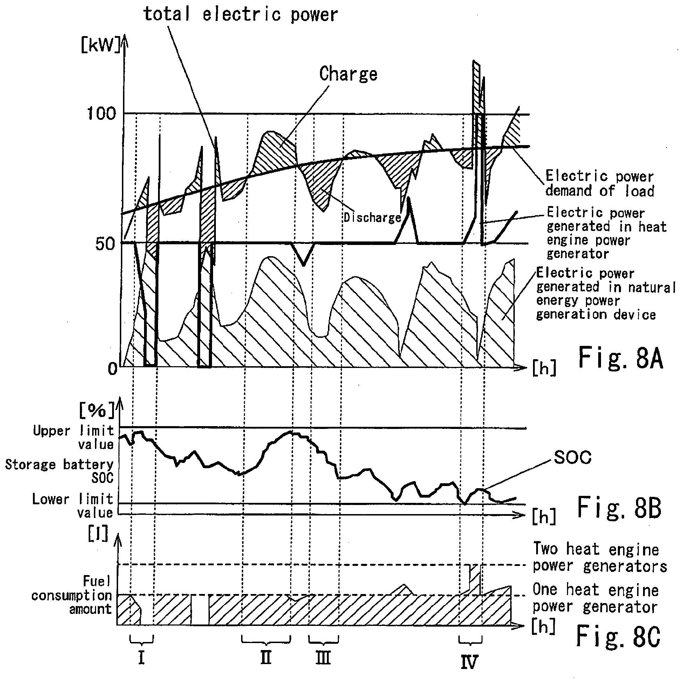

Fig. 8 is a graph for explaining the exemplary operation controlled by the control device of the microgrid according to the present embodiment. An upper graph (a) of Fig. 8 indicates a change in the total electric power [kW] which is a sum of the electric power generated in the heat engine power generators 2n and the electric power generated in the natural energy power generation device 3, the change occurring over time with respect to the electric power demand of the load 11. An intermediate graph (b) of Fig. 8 indicates a change in the SOC [%] of the storage battery 4, the change occurring over time. A lower graph (c) of Fig. 8 indicates a change in fuel consumption amount [l] of the heat engine power generators 2n, the change occurring over time..

As shown in Fig. 8, in a range I, in a case where the total electric power is larger than the electric power demand of the load 11 and the SOC of the storage battery 4 is close to the upper limit value of the SOC, the control device 7 causes the heat engine power generators 2n to reduce the electric power output and the storage battery 4 to be discharged.

In a range II, in a case where the total electric power is larger than the electric power demand of the load 11, the control device 7 causes the storage battery 4 to be charged with surplus electric power.

In a range III, in a case where the total electric power is smaller than the electric power demand of the load 11, the control device 7 causes the storage battery 4 to be discharged to compensate for the deficient electric power.

In a range IV, in a case where the total electric power is smaller than the electric power demand of the load 11 and the SOC of the storage battery 4 is close to the lower limit value of the SOC, the control device 7 causes the heat engine power generators 2n to increase the electric power output.

In the present embodiment, the microgrid 1 includes the electric power converter 5 and the natural energy power generation device 3, and is configured to make the best use of the natural energy. In this configuration, the storage battery is charged with the electric power generated using the fossil fuel, or is discharged, depending on the situations. This makes it possible to maintain the high-efficient operation of the heat engine by use of the natural energy which is friendly to a global environment (earth conscious) in the microgrid 1 of the present embodiment, as compared to the conventional example which backs up the high-efficient operation of the heat engines.

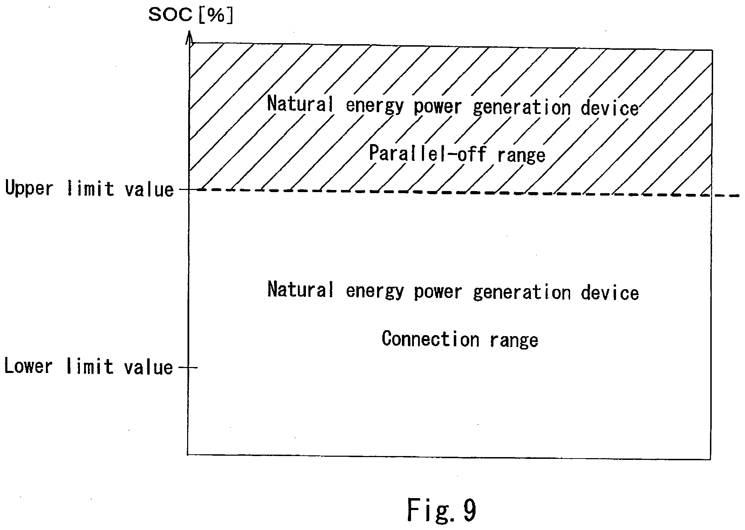

Even in a discharge mode, if the total electric power which is a sum of the electric power generated in the heat engine power generators 2n and the electric power generated in the natural energy power generation device 3, exceeds the electric power demand of the load 11, the storage battery 4 may be excessively charged. Fig. 9 is a graph for explaining the control for preventing the storage battery 4 of the microgrid 1 from being excessively charged. As shown in Fig. 9, in the present embodiment, in a case where the total electric power which is a sum of the target electric power of the heat engine power generators 2n and the electric power generated in the natural energy power generation device 3 is larger than the electric power demand of the load 11 and the amount of electric power (or the SOC of the storage battery) charged in the storage battery 4 of the electric storage device 6 exceeds a predetermined upper limit value, the control device 7 performs parallel-off of the natural energy power generation device 3 from the distribution line 10. Specifically, in response to a parallel-off command output from the control device 7, the parallel-off unit 8 of Fig. 1 performs parallel-off of the natural energy power generation device 3 from the distribution line 10. In this configuration, since it becomes possible to avoid a situation in which the operation of the microgrid 1 is impeded due to the excessively charged state of the storage battery 4, the operation of the microgrid 1 can continue.

Although in the present embodiment, the control device 7 is configured to perform the overall control of the microgrid 1 including the electric power converter 5, the present invention is not limited to this configuration. For example, distributed control may be performed in such a manner that a plurality of control devices are distributed to correspond to the heat engine power generators 2n, the natural energy power generation device 3, and the electric power converter 5, respectively, and realize the function of the control device 7 as a whole.

Although in the microgrid 1 of the present embodiment, the natural energy power generation device 3 is described as the power generation device which makes use of the solar light or the wind force, the natural energy power generation device 3 may be a power generation device which makes use of other natural energy such as tidal power or geothermal heat. Further, the microgrid 1 may be configured in such a manner that a plurality of natural energy power generation devices 3 are connected in parallel with the distribution line 10 and operate in parallel.

Although in the present embodiment, the microgrid 1 is operated independently of the utility power supply, the present invention is not limited to this, and the microgrid 1 may be operated interactively with the utility power supply via the distribution line 10.

**Industrial Applicability**

The present invention is useful in a microgrid which uses heat engine power generators and a natural energy power generation device.

**Reference Signs List**

| | |
|---|---|
| 1 | microgrid |
| 2 | heat engine power generation device |
| 2n | heat engine power generator |
| 3 | natural energy power generation device |
| 4 | storage battery |
| 5 | electric power converter |
| 6 | electric storage device |
| 7 | control device |
| 8 | parallel-off unit |
| 10 | distribution line |
| 11 | load |

| | |
|---|---|
| 12, 13 | electric power detector |
| 14 | SOC detector |
| 21 | electric power difference calculation section |
| 22 | charged/discharged electric power calculation section |
| 23 | target electric power calculation section |
| 24 | electric storage device control section |

**Claims**

1. A control device for a microgrid (1) including:

   at least one heat engine power generator (2n) which is connected to a load (11) via a distribution line (10) and operates a heat engine to generate electric power;
   a natural energy power generation device (3) which is connected to the distribution line (10) and generates the electric power by use of natural energy; and
   an electric storage device (6) including a storage battery (4) and an electric power converter (5), the electric storage device (6) being configured to cause the electric power converter (5) to charge the storage battery (4) with the electric power fed via the distribution line (10),
   the control device being configured to control the at least one heat engine power generator (2n) to perform and stop power generation and control the electric storage device (6) to charge or discharge the storage battery (4), to maintain the storage battery (4) in a chargeable or dischargeable state,

   **characterized in that**
   the electric storage device (6) is configured to cause the electric power converter (5) to discharge the storage battery (4) to feed the electric power to the distribution line (10),
   the control device firstly supplies the electric power generated in the natural energy power generation device (3) to the load (11) to meet the electric power demand of the load (11), and if the electric power supplied by the control device is deficient, the control device controls the heat engine power generator (2n) and the electric storage device (6) in such a manner that the control device causes the heat engine power generator (2n) to generate the electric power at a constant amount, and the storage battery (4) of the electric storage device (6) to be charged or discharged to compensate for surplus or deficient electric power of total electric power which is a sum of the electric power generated in the heat engine power generator (2n) and the electric power generated in the natural energy power generation device (3), with respect to the electric power demand of the load (11).

**2.** The control device for the microgrid (1) according to claim 1,
wherein the control device is configured to control the at least one heat engine power generator (2n) to perform or stop the power generation and control the electric storage device (6) to charge or discharge the storage battery (4) such that a state of charge of the storage battery (4) reaches a predetermined target value, to maintain the storage battery (4) in the chargeable or dischargeable state.

**3.** The control device for the microgrid (1) according to claim 1, the control device comprising:

an electric power difference calculation section (21) for calculating an electric power difference between the electric power demand of the load (11) and the electric power generated in the natural energy power generation device (3);
a charged/discharged electric power calculation section (22) for calculating charged/discharged electric power with respect to the storage battery (4) based on a state of charge of the electric storage device (6);
a target electric power calculation section (23) for calculating target electric power of the at least one heat engine power generator (2n), based on the electric power difference and the charged/discharged electric power; and
an electric storage device control section (24) for controlling the electric storage device (6) to charge or discharge the storage battery (4), based on total electric power which is a sum of the electric power generated in the natural energy power generation device (3) and the target electric power of the at least one heat engine power generator (2n), and the electric power demand of the load (11).

**4.** The control device for the microgrid (1) according to claim 3,
wherein the electric power difference calculation section (21) further includes:

a filtering processing section (32) for performing filtering processing of the electric power difference; and
a multi-value processing section (33) for performing multi-value processing of the electric power difference which has been subjected to the filtering processing to convert the electric power difference into two or more values, each of the two or more values indicating the electric power corresponding to the number of the at least one heat engine power generator (2n) which generates the electric power at a constant amount, the number including zero,
wherein the target electric power calculation section (23) calculates the target electric power of the at least one heat engine power generator (2n) based on the electric power difference which has been subjected to the filtering processing and the multi-value processing, and the charged/discharged electric power.

**5.** The control device for the microgrid (1) according to claim 3 or 4,
wherein the target electric power calculation section (23) is configured to limit the target electric power of the at least one heat engine power generator (2n) to a predetermined limit value.

**6.** The control device for the microgrid (1) according to claim 1,
wherein the control device is configured to perform parallel-off of the natural energy power generation device (3) from the distribution line (10), when total electric power which is a sum of target electric power of the at least one heat engine power generator (2n) and the electric power generated in the natural energy power generation device (3) is larger than the electric power demand of the load (11) and an amount of the electric power charged in the storage battery (4) of the electric storage device (6) or a state of charge of the storage battery (4) exceeds a predetermined upper limit value.

**7.** A method for controlling a microgrid (1) including:

at least one heat engine power generator (2n) which is connected to a load (11) via a distribution line (10) and operates a heat engine to generate electric power;
a natural energy power generation device (3) which is connected to the distribution line (10) and generates the electric power by use of natural energy; and
an electric storage device (6) including a storage battery (4) and an electric power converter (5), the electric storage device (6) being configured to cause the electric power converter (5) to charge the storage battery (4) with the electric power fed via the distribution line (10)
the method comprising:

controlling the at least one heat engine power generator (2n) to perform and stop power generation and controlling the electric storage device (6) to charge or discharge the storage battery (4), to maintain the storage battery (4) in a chargeable or dischargeable state,
**characterized in that**
the electric storage device (6) is configured to cause the electric power converter (5) to discharge the storage battery (4) to feed the electric power to the distribution line (10), the electric power generated in the natural energy power generation device (3) is firstly supplied to the load (11) to meet the electric power demand of the load (11), and

if the electric power supplied by the control device is deficient, the heat engine power generator (2n) and the electric storage device (6) are controlled in such a manner that the heat engine power generator (2n) generates the electric power at a constant amount, and the storage battery (4) of the electric storage device (6) is charged or discharged to compensate for surplus or deficient electric power of the total electric power which is a sum of the electric power generated in the heat engine power generator (2n) and the electric power generated in the natural energy power generation device (3), with respect to the electric power demand of the load (11).

## Patentansprüche

1.  Steuerungsvorrichtung für ein Mikronetz (1), das umfasst:

    wenigstens einen Wärmekraftmaschinen-Stromgenerator (2n), der über eine Verteilungsleitung (10) mit einer Last (11) verbunden ist und von einer Wärmekraftmaschine dazu betrieben wird, Strom zu erzeugen;
    eine mit natürlicher Energie betriebene Stromgeneratorvorrichtung (3), die mit der Verteilungsleitung (10) verbunden ist und unter Verwendung von natürlicher Energie Strom erzeugt; und
    eine Stromspeichervorrichtung (6), die einen Speicherakku (4) und einen Stromspannungswandler (5) umfasst, wobei die Stromspeichervorrichtung (6) dazu konfiguriert ist, zu bewirken, dass der Stromspannungswandler (5) den Speicherakku (4) mit Strom, der über die Verteilungsleitung (10) zugeführt wird, auflädt,
    wobei die Steuerungsvorrichtung dazu konfiguriert ist, den wenigstens einen Wärmekraftmaschinen-Stromgenerator (2n) derart zu steuern, dass dieser eine Stromerzeugung durchführt oder beendet und die Stromspeichervorrichtung (6) derart steuert, dass diese den Speicherakku (4) auf- oder entlädt, um den Speicherakku (4) in einem aufladbaren oder einem entladbaren Zustand zu halten, **dadurch gekennzeichnet, dass** die Stromspeichervorrichtung (6) dazu konfiguriert ist, zu bewirken, dass der Stromspannungswandler (5) den Speicherakku (4) entlädt, um den Strom an die Verteilungsleitung (10) zuzuführen,
die Steuerungsvorrichtung zuerst den in der mit natürlicher Energie betriebenen Stromgeneratorvorrichtung (3) erzeugten Strom an die Last (11) zuführt, um den Strombedarf der Last (11) zu erfüllen, und
wenn der von der Steuerungsvorrichtung zugeführte Strom nicht ausreichend ist, die Steuerungsvorrichtung den Wärmekraftmaschinen-Stromgenerator (2n) und die Stromspeichervorrichtung (6) derart steuert, dass die Steuerungsvorrichtung bewirkt, dass der Wärmekraftmaschinen-Stromgenerator (2n) eine konstante Menge an Strom erzeugt, und der Speicherakku (4) der Stromspeichervorrichtung (6) auf- oder entladen wird, um den Überschuss oder den Mangel an Strom von der Gesamtmenge an Strom, bei der es sich um die Summe des in dem Wärmekraftmaschinen-Stromgenerator (2n) erzeugten Stroms und des in der mit natürlicher Energie betriebenen Stromgeneratorvorrichtung (3) erzeugten Stroms handelt, in Bezug auf den Strombedarf der Last (11) auszugleichen.

2.  Steuerungsvorrichtung für das Mikronetz (1) gemäß Anspruch 1,
    wobei die Steuerungsvorrichtung dazu konfiguriert ist, den wenigstens einen Wärmekraftmaschinen-Stromgenerator (2n) derart zu steuern, dass dieser eine Stromerzeugung durchführt oder beendet und die Stromspeichervorrichtung (6) derart steuert, dass diese den Speicherakku (4) auf- oder entlädt, so dass der Ladezustand des Speicherakkus (4) einen vorbestimmten Zielwert erreicht, um den Speicherakku (4) in dem aufladbaren oder dem entladbaren Zustand zu halten.

3.  Steuerungsvorrichtung für das Mikronetz (1) gemäß Anspruch 1, wobei die Steuerungsvorrichtung umfasst:

    einen Stromdifferenz-Berechnungsabschnitt (21) zur Berechnung einer Stromdifferenz zwischen dem Strombedarf der Last (11) und dem in der mit natürlicher Energie betriebenen Stromgeneratorvorrichtung (3) erzeugten Strom;
    einen Stromauf-/entladungsberechnungsabschnitt (22) zur Berechnung des auf- bzw. entladenen Stroms in Bezug auf den Speicherakku (4) basierend auf dem Ladezustand der Stromspeichervorrichtung (6);
    einen Zielstromberechnungsabschnitt (23) zur Berechnung des Zielstroms des wenigstens einen Wärmekraftmaschinen-Stromgenerators (2n) basierend auf der Stromdifferenz und dem auf- bzw. entladenen Strom; und

einen Stromspeichervorrichtungssteuerungsabschnitt (24) zur Steuerung der Stromspeichervorrichtung (6) dazu, den Speicherakku (4) aufzuladen oder zu entladen basierend auf der Gesamtmenge an Strom, bei der es sich um die Summe des in der mit natürlicher Energie betriebenen Stromgeneratorvorrichtung (3) erzeugten Stroms und des in dem Wärmekraftmaschinen-Stromgenerator (2n) erzeugten Stroms handelt, sowie auf dem Strombedarf der Last (11).

4. Steuerungsvorrichtung für das Mikronetz (1) gemäß Anspruch 3,
wobei der Stromdifferenz-Berechnungsabschnitt (21) weiterhin umfasst:

einen Filterungsverarbeitungsabschnitt (32) zur Durchführung einer Filterungsverarbeitung der Stromdifferenz; und

einen Mehrwert-Verarbeitungsabschnitt (33) zur Durchführung einer Mehrwert-Verarbeitung an der Stromdifferenz, die einer Filterungsverarbeitung unterzogen worden ist, um die Stromdifferenz in zwei oder mehr Werte umzuwandeln, wobei jeder der zwei oder mehr Werte den Strom anzeigt, der der Anzahl der Menge aus dem wenigstens einen Wärmekraftmaschinen-Stromgenerator (2n), der eine konstante Menge an Strom erzeugt, entspricht, wobei die Anzahl Null einschließt,

wobei der Zielstromberechnungsabschnitt (23) den Zielstrom des wenigstens einen Wärmekraftmaschinen-Stromgenerators (2n) basierend auf der Stromdifferenz, die der Filterungsverarbeitung und der Mehrwert-Verarbeitung unterzogen worden ist, und dem auf- bzw. entladenen Strom berechnet.

5. Steuerungsvorrichtung für das Mikronetz (1) gemäß Anspruch 3 oder 4,
wobei der Zielstromberechnungsabschnitt (23) dazu konfiguriert ist, den Zielstrom des wenigstens einen Wärmekraftmaschinen-Stromgenerators (2n) auf einen vorbestimmten Grenzwert zu beschränken.

6. Steuerungsvorrichtung für das Mikronetz (1) gemäß Anspruch 1,
wobei die Steuerungsvorrichtung dazu konfiguriert ist, eine Parallel-Ausschaltung der mit natürlicher Energie betriebenen Stromgeneratorvorrichtung (3) von der Verteilungsleitung (10) durchzuführen, wenn die Gesamtmenge an Strom, bei der es sich um die Summe aus dem Zielstrom des wenigstens einen Wärmekraftmaschinen-Stromgenerators (2n) und des in der mit natürlicher Energie betriebenen Stromgeneratorvorrichtung (3) erzeugten Stroms handelt, höher ist als der Strombedarf der Last (11), und wenn eine Menge des in den Speicherakku (4) der Stromspeichervorrichtung (6) aufgeladenen Stroms oder ein Ladezustand des Speicherakkus (4) einen vorbestimmten oberen Grenzwert überschreitet.

7. Verfahren zur Steuerung eines Mikronetzes (1), das umfasst:

wenigstens einen Wärmekraftmaschinen-Stromgenerator (2n), der über eine Verteilungsleitung (10) mit einer Last (11) verbunden ist und von einer Wärmekraftmaschine dazu betrieben wird, Strom zu erzeugen;
eine mit natürlicher Energie betriebene Stromgeneratorvorrichtung (3), die mit der Verteilungsleitung (10) verbunden ist und unter Verwendung von natürlicher Energie Strom erzeugt; und
eine Stromspeichervorrichtung (6), die einen Speicherakku (4) und einen Stromspannungswandler (5) umfasst, wobei die Stromspeichervorrichtung (6) dazu konfiguriert ist, zu bewirken, dass der Stromspannungswandler (5) den Speicherakku (4) mit Strom, der über die Verteilungsleitung (10) zugeführt wird, auflädt,
wobei das Verfahren umfasst:

Steuern des wenigstens einen Wärmekraftmaschinen-Stromgenerators (2n) derart, dass dieser eine Stromerzeugung durchführt oder beendet und Steuern der Stromspeichervorrichtung (6) derart, dass diese den Speicherakku (4) auf- oder entlädt, um den Speicherakku (4) in einem aufladbaren oder einem entladbaren Zustand zu halten, **dadurch gekennzeichnet, dass**
die Stromspeichervorrichtung (6) dazu konfiguriert ist, zu bewirken, dass der Stromspannungswandler (5) den Speicherakku (4) entlädt, um den Strom an die Verteilungsleitung (10) zuzuführen,
der in der mit natürlicher Energie betriebenen Stromgeneratorvorrichtung (3) erzeugte Strom zuerst an die Last (11) zugeführt wird, um den Strombedarf der Last (11) zu erfüllen, und
wenn der von der Steuerungsvorrichtung zugeführte Strom nicht ausreichend ist, der Wärmekraftmaschinen-Stromgenerator (2n) und die Stromspeichervorrichtung (6) derart gesteuert werden, dass der Wärmekraftmaschinen-Stromgenerator (2n) eine konstante Menge an Strom erzeugt, und der Speicherakku (4) der Stromspeichervorrichtung (6) auf- oder entladen wird, um den Überschuss oder den Mangel an Strom von der Gesamtmenge an Strom, bei der es sich um die Summe des in dem Wärmekraftmaschinen-Stromgenerator (2n) erzeugten Stroms und des in der mit natürlicher Energie betriebenen Stromgeneratorvorrichtung (3) erzeugten Stroms handelt, in Bezug auf den Strombedarf der Last (11) auszugleichen.

**Revendications**

1. Dispositif de commande pour microréseau (1) comprenant :

   au moins un générateur d'électricité à moteur thermique (2n) relié à une charge (11) par une ligne de distribution (10) et fonctionnant grâce à un moteur thermique pour produire de l'énergie électrique,
   un dispositif générateur d'électricité fonctionnant à l'énergie naturelle (3) relié à la ligne de distribution (10) et produisant de l'énergie électrique en exploitant de l'énergie naturelle, et
   un dispositif accumulateur d'électricité (6) comprenant une batterie d'accumulateurs (4) et un convertisseur d'énergie électrique (5), le dispositif accumulateur d'électricité (6) étant conçu pour amener le convertisseur d'énergie électrique (5) à charger la batterie d'accumulateurs (4) avec de l'énergie électrique apportée par la ligne de distribution (10) ;
   le dispositif de commande étant conçu pour commander à l'au moins un générateur d'électricité à moteur thermique (2n) d'effectuer ou d'arrêter la production d'énergie et pour commander au dispositif accumulateur d'électricité (6) de charger ou de décharger la batterie d'accumulateurs (4), pour maintenir la batterie d'accumulateurs (4) dans un état chargeable ou déchargeable,
   **caractérisé en ce que**
   le dispositif accumulateur d'électricité (6) est conçu pour amener le convertisseur d'énergie électrique (5) à décharger la batterie d'accumulateurs (4) pour apporter l'énergie électrique à la ligne de distribution (10),
   le dispositif de commande commence à fournir à la charge (11) l'énergie électrique produite dans le dispositif générateur d'électricité fonctionnant à l'énergie naturelle (3) pour répondre à la demande en énergie électrique de la charge (11), et
   si l'énergie électrique fournie par le dispositif de commande est déficiente, le dispositif de commande commande le générateur d'électricité à moteur thermique (2n) et le dispositif accumulateur d'électricité (6) de telle manière que le dispositif de commande amène le générateur d'électricité à moteur thermique (2n) à produire de l'énergie électrique selon une quantité constante, et la batterie d'accumulateurs (4) du dispositif accumulateur d'électricité (6) à être chargée ou déchargée pour compenser un surplus ou une déficience en énergie électrique concernant l'énergie électrique totale consistant en la somme de l'énergie électrique produite dans le générateur d'électricité à moteur thermique (2n) et de l'énergie électrique produite dans le dispositif générateur d'électricité fonctionnant à l'énergie naturelle (3), eu égard à la demande en énergie électrique de la charge (11).

2. Dispositif de commande destiné à un microréseau (1) selon la revendication 1,
   dans lequel le dispositif de commande est conçu pour commander à l'au moins un générateur d'électricité à moteur thermique (2n) d'effectuer ou d'arrêter la production d'énergie et pour commander au dispositif accumulateur d'électricité (6) de charger ou de décharger la batterie d'accumulateurs (4) de manière que l'état de charge de la batterie d'accumulateurs (4) atteint une valeur cible prédéterminée, pour maintenir la batterie d'accumulateurs (4) à l'état chargeable ou déchargeable.

3. Dispositif de commande destiné à un microréseau (1) selon la revendication 1, le dispositif de commande comprenant :

   une section de calcul de différentiel d'énergie électrique (21) destinée à calculer un différentiel d'énergie électrique entre la demande en énergie électrique de la charge (11) et l'énergie électrique produite dans le dispositif générateur d'électricité fonctionnant à l'énergie naturelle (3),
   une section de calcul de l'énergie électrique chargée/déchargée (22) destinée à calculer l'énergie électrique chargée/déchargée eu égard à la batterie d'accumulateurs (4) en fonction de l'état de charge du dispositif accumulateur d'électricité (6),
   une section de calcul de l'énergie électrique cible (23) destinée à calculer l'énergie électrique cible de l'au moins un générateur d'électricité à moteur thermique (2n), en fonction du différentiel d'énergie électrique et de l'énergie électrique chargée/déchargée, et
   une section de commande de dispositif accumulateur d'électricité (24) destinée à commander au dispositif accumulateur d'électricité (6) de charger ou de décharger la batterie d'accumulateurs (4), en fonction de l'énergie électrique totale consistant en la somme de l'énergie électrique produite dans le dispositif générateur d'électricité fonctionnant à l'énergie naturelle (3) et de l'énergie électrique cible de l'au moins un générateur d'électricité à moteur thermique (2n), et de la demande en énergie électrique de la charge (11).

4. Dispositif de commande destiné à un microréseau (1) selon la revendication 3, dans lequel la section de calcul de différentiel d'énergie électrique (21) comprend en outre :

une section de traitement par filtrage (32) destinée à réaliser un traitement par filtrage du différentiel d'énergie électrique, et

une section de traitement à valeurs multiples (33) destinée à réaliser un traitement à valeurs multiples du différentiel d'énergie électrique ayant été soumis au traitement par filtrage afin de convertir le différentiel d'énergie électrique en au moins deux valeurs, chacune des au moins deux valeurs indiquant l'énergie électrique correspondant au nombre de l'au moins un générateur d'électricité à moteur thermique (2n) produisant de l'énergie électrique selon une quantité constante, ledit nombre pouvant être de zéro,

dans lequel la section de calcul de l'énergie électrique cible (23) calcule l'énergie électrique cible de l'au moins un générateur d'électricité à moteur thermique (2n) en fonction du différentiel d'énergie électrique ayant été soumis au traitement par filtrage et au traitement à valeurs multiples, et de l'énergie électrique chargée/déchargée.

5. Dispositif de commande destiné à un microréseau (1) selon la revendication 3 ou 4, dans lequel la section de calcul de l'énergie électrique cible (23) est conçue pour limiter l'énergie électrique cible de l'au moins un générateur d'électricité à moteur thermique (2n) à une valeur limite prédéterminée.

6. Dispositif de commande destiné à un microréseau (1) selon la revendication 1, dans lequel le dispositif de commande est conçu pour effectuer une dérivation du dispositif générateur d'électricité fonctionnant à l'énergie naturelle (3) par rapport à la ligne de distribution (10), lorsque l'énergie électrique totale consistant en la somme de l'énergie électrique cible de l'au moins un générateur d'électricité à moteur thermique (2n) et de l'énergie électrique produite dans le dispositif générateur d'électricité fonctionnant à l'énergie naturelle (3) est supérieure à la demande en énergie électrique de la charge (11) et que la quantité de l'énergie électrique chargée dans la batterie d'accumulateurs (4) du dispositif accumulateur d'électricité (6) ou l'état de charge de la batterie d'accumulateurs (4) dépasse une valeur limite supérieure prédéterminée.

7. Procédé de commande d'un microréseau (1) comprenant :

au moins un générateur d'électricité à moteur thermique (2n) relié à une charge (11) par une ligne de distribution (10) et fonctionnant grâce à un moteur thermique pour produire de l'énergie électrique,

un dispositif générateur d'électricité fonctionnant à l'énergie naturelle (3) relié à la ligne de distribution (10) et produisant de l'énergie électrique en exploitant de l'énergie naturelle, et

un dispositif accumulateur d'électricité (6) comprenant une batterie d'accumulateurs (4) et un convertisseur d'énergie électrique (5), le dispositif accumulateur d'électricité (6) étant conçu pour amener le convertisseur d'énergie électrique (5) à charger la batterie d'accumulateurs (4) avec de l'énergie électrique apportée par la ligne de distribution (10),

le procédé comprenant :

la commande de l'au moins un générateur d'électricité à moteur thermique (2n) afin qu'il effectue ou arrête la production d'énergie et la commande du dispositif accumulateur d'électricité (6) afin qu'il charge ou décharge la batterie d'accumulateurs (4), pour maintenir la batterie d'accumulateurs (4) dans un état chargeable ou déchargeable,

**caractérisé en ce que**

le dispositif accumulateur d'électricité (6) est conçu pour amener le convertisseur d'énergie électrique (5) à décharger la batterie d'accumulateurs (4) pour apporter l'énergie électrique à la ligne de distribution (10),

l'énergie électrique produite dans le dispositif générateur d'électricité fonctionnant à l'énergie naturelle (3) commence à être fournie à la charge (11) pour répondre à la demande en énergie électrique de la charge (11), et

si l'énergie électrique fournie par le dispositif de commande est déficiente, le générateur d'électricité à moteur thermique (2n) et le dispositif accumulateur d'électricité (6) sont commandés de telle manière que le générateur d'électricité à moteur thermique (2n) produit de l'énergie électrique selon une quantité constante, et que la batterie d'accumulateurs (4) du dispositif accumulateur d'électricité (6) est chargée ou déchargée pour compenser un surplus ou une déficience en énergie électrique concernant l'énergie électrique totale consistant en la somme de l'énergie électrique produite dans le générateur d'électricité à moteur thermique (2n) et de l'énergie électrique produite dans le dispositif générateur d'électricité fonctionnant à l'énergie naturelle (3), eu égard à la demande eh énergie électrique de la charge (11).

Fig. 1

EP 3 018 787 B1

Fig. 2

EP 3 018 787 B1

Fig. 3

Fig. 4

EP 3 018 787 B1

Fig. 5

EP 3 018 787 B1

Fig. 6

EP 3 018 787 B1

[kW]

Electric power generated
in heat engine

100

Charge

Electric power
demand of load

Discharge

50

0                                                    [h]

Fig. 7A

[%]

Upper limit
value

Storage battery
SOC

SOC

Lower limit
value                                                [h]

[l]

Fig. 7B

Two heat engine
power generators

Fuel
consumption
amount

One heat engine
power generator

[h]

Fig. 7C

total electric power

Charge

[kW]

100

Electric power
demand of load

Electric power
generated in heat
engine power
generator

50

Discharge

Electric power
generated in natural
energy power
generation device

0 [h]

**Fig. 8A**

[%]

Upper limit
value

Storage battery
SOC

SOC

Lower limit
value [h]

**Fig. 8B**

[l]

Two heat engine
power generators

Fuel
consumption
amount

One heat engine
power generator

[h] **Fig. 8C**

I          II    III              IV

SOC [%]

Natural energy power generation device

Parallel-off range

Upper limit value

Natural energy power generation device

Connection range

Lower limit value

Fig. 9

EP 3 018 787 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007082311 A
- JP 2002135979 A
- JP 2011083044 A
- JP 2010259303 A
- EP 2528181 A1
- WO 2013024709 A1
- WO 2009015331 A1
- US 20130099576 A1
- JP 2007244068 A
- JP 2009225599 A